# EUROPEAN PATENT SPECIFICATION

(11) **EP 2 176 330 B1**
(45) Date of publication and mention of the grant of the patent: **20.02.2013**
(21) Application number: 08797228.7
(22) Date of filing: 06.08.2008
(51) Int. Cl.: C08K 7/00, C08K 7/02, C08K 7/14, C08K 3/34, C08K 3/40, H01B 3/42, H01F 27/32, H02K 3/30

(54) **REINFORCED POLYESTER COMPOSITIONS FOR HIGH DIELECTRIC PERFORMANCE**
VERSTÄRKTE POLYESTERZUSAMMENSETZUNGEN FÜR HOHE DIELEKTRISCHE LEISTUNG
COMPOSITIONS DE POLYESTER RENFORCÉES POUR UNE PERFORMANCE DIÉLECTRIQUE ÉLEVÉE

(30) Priority: 09.08.2007 US 964081 P
(43) Date of publication of application: 21.04.2010
(73) Proprietor: E. I. du Pont de Nemours and Company, Wilmington, DE 19898 (US)
(72) Inventor: ARPIN, Thierry, F-74100 Ambilly (FR)
(74) Representative: Morf, Jan Stefan
(86) International application number: PCT/US2008/072264
(87) International publication number: WO 2009/020989

(56) References cited:
- EP-A- 0 400 935
- US-A- 4 414 352
- US-A- 4 806 586
- US-A- 4 874 809
- US-A- 5 560 984

## Description

### Field of Invention

The present invention relates to the field of mineral reinforced polyesters having improved dielectrical performance. More particularly the present invention relates to the use of polyester compositions for high performance dielectric applications, and involving melt blending mixtures of thermoplastic polyester polymer(s) with fillers, reinforcing agents and the like..

### Background of the invention

High temperature resins based on polyester and especially poly(cyclohexylene-dimethylene)terephatalate possess desirable chemical resistance, processability and heat resistance. This makes them particularly well suited for demanding high performance automotive and electrical/electronics applications. It is well known in the field of engineering polymers to add various reinforcements to the resin, such as glass fibers, glass flakes, carbon fiber, mica, wollastonite, talc, and calcium carbonate to improve the physical properties of molded part. It has been shown that polyester compositions comprising flat glass fiber having a non-circular cross-sectional shape have improved dimensional stability at high temperature while retaining a good degree of Mechanical properties. For many electrical and electronic applications, the polyester resin should exhibit a balance of different characteristics. In the automotive industry for example, and especially for structures made of thermoplastic materials used in underhood areas of automobiles and design to have good dielectric strength, such structures are desired to retain their structural integrity in the face of the surrounding environment.

A dielectric material (also called electrically non-conducting material) is a material having a relatively low electrical conductivity, i.e. an insulator, which can support electrostatic stresses. The ability of a dielectric to resist electrical breakdown under the influence of strong electric fields without experiencing failure of its insulating properties is defined as the dielectric strength. In many applications, a high dielectric strength is required. By "high dielectric strength", it is meant that the value of the dielectric strength is higher than 30 kV mm⁻¹.

Conventional materials having good dielectric strength are polyesters or polyphenylene sulfides. Improvement of mechanical performance, such as for example stiffness, dimensional stability and resistance to heat and creep has been achieved by filling a thermoplastic polyester resin with mica and conventional glass fillers. Nevertheless, the dielectric strength of such polyester compositions is not high enough for some demanding applications.

US patent 4,296,021 discloses aluminum silicate reinforced high molecular weight polyester compositions that show good mechanical properties while maintaining the inherent resistance to high voltage breakdown.

There remains a need for a high performance polyester composition, having improved dielectrical performance while retaining a good degree of mechanical properties.

### Summary of the invention

The inventor has surprisingly found that the use of particular glass fillers in combination with mica and conventional glass fillers in polyester compositions leads to resins having increased dielectric performance while maintaining good mechanical properties.

In a first aspect, the invention provides a polyester compositions made by melt blending a mixture comprising at least one thermoplastic polyester polymer and a combination of particular glass fillers, mica and conventional glass fillers for high performance dielectric applications, wherein particular glass fillers are fibrous glass fillers having a non-circular cross-sectional aspect ratio of 4 or greater than and conventional glass fillers are fibrous reinforcing agent having a circular cross section, glass flakes or mixtures thereof.

Therefore there is disclosed and claimed herein a polyester composition for high performance dielectric applications, wherein the polyester composition is made by melt blending a mixture comprising;
a) at least one thermoplastic polyester polymer;
b) a fibrous glass filler having a non-circular cross-sectional aspect ratio of 4 or greater than 4;
c) a fibrous reinforcing agent having a circular cross section, glass flakes or mixtures thereof; and
d) mica.

In a second aspect, the invention provides a method to improve dielectric performance by using a combination of particular glass fillers, mica and conventional glass fillers in polyester compositions, wherein particular glass fillers are fibrous glass fillers having a non-circular cross-sectional aspect ratio of 4 or greater than 4 and conventional glass fillers are fibrous reinforcing agent having a circular cross section, glass flakes or mixtures thereof.

Insulating units and electronic or electrical devices made from the instant polyester compositions are also disclosed and claimed herein.

### Detailed description of the invention

The polyester composition of the present invention is made by melt blending a mixture comprising at least one thermoplastic polyester polymer, a fibrous glass filler having a non-circular cross-sectional aspect ratio of 4 or greater than 4, a fibrous reinforcing agent having a circular cross section, glass flakes or mixtures thereof and mica. As used throughout the specification, the phrases "about" and "at or about" are intended to mean that the amount or value in question may be the value designated or some other value about the same. The phrase is intended to convey that similar values promote equivalent results or effects according to the invention.

For the purposes of the description, "high performance dielectric applications" means that the applications require dielectric strength values that are higher than 30 kV mm⁻¹, preferably higher than 35 kV mm⁻¹ and more preferably higher than 40 kV mm⁻¹.

The at least one thermoplastic polyester polymer designated (a) elsewhere herein comprised in the polyester composition of the invention is present in an amount from 40 to 70 wt-% and preferably from 45 to 65 wt-%, the weight percentages being based on the total weight of the polyester composition. Preferably, the at least one thermoplastic polyester polymer used in the polyester composition according to the present invention is chosen among polybutylene terephatalate (PBT), polyethylene terephthalate (PET). poly(cyclohexylene-dimethylene) terephthalate (PCT) and mixtures thereof, more preferably, it is poly(cyclohexylene-dimethylene) terephthalate. PCT (poly(cyclohexylene-dimethylene) terephthalate), has a high melting point (i.e. about 285°C) and is characterized by high mechanical properties combined with heat and chemical resistance which makes it suitable for high performance applications demanding Mechanical stability over extended high temperature ranges. Such polymer compositions are particularly suitable for, among other applications, the manufacture of electrical/electronic and automotive components and for use in articles made from these compositions.

Poly(cyclohexylene-dimethylene) terephthalate is a polyester formed from a diol and a dicarboxylic acid. By "poly(1,4-cyclohexanedimethanol terephthalate)" (PCT) is meant a polyester formed from a diol and a dicarboxylic acid. At least 80 mole percent, more preferably at least 90 mole percent, and especially preferably all of the diol repeat units are derived from 1,4-cyclohexanedimethanol and are of formula (I). 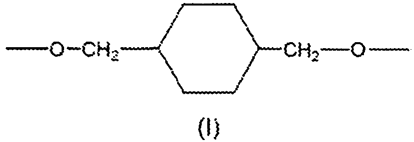 At least about 80 mole percent, more preferably at least about 90 mole percent, and especially preferably all of the dicarboxylic acid repeat units are derived from terephthalic acid and are of formula (II).

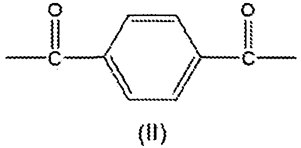

The PCT may also contain up to 10 mole percent (based on the total amount of (1) and (11) present) of one or more repeat unit derived from hydroxycarboxylic acids, although it is preferred that no such repeat unit be present. One particular preferred PCT contains (I) as the diol repeat unit, (II) is 95 mole percent of dicarboxylic acid repeat unit and the other 5 mole percent of the dicarboxylic repeat unit is derived from isophthalic acid, and no repeat units derived from hydroxycarboxylic acid are present.

The polyester composition according to the present invention comprises a fibrous glass filler designated (b) elsewhere herein and having a non-circular cross-sectional aspect ratio of 4 or greater than 4. Preferably, these fibrous glass fillers are present in an amount from 10 to 35 wt-% and more preferably in an amount from 10 to 30 wt-%, the weight percentages being based on the total weight of the polyester composition. When the amount of fibrous non-circular cross-sectional glass filler is less than 10 wt-%, little beneficial effect can be obtained. These fibrous glass fillers are characterized by a non-circular cross section. The non-circular cross section have the shape of, for example, an oval, elliptic, cocoon or rectangular. These kinds of non-circular cross-sectional fibrous glass filler are described and differentiated from conventional glass fillers by their cross-sectional aspect ratio and are differentiated from conventional glass flakes by their fibrous nature. The term "fibrous" in the context of the invention means composed of one or multiple filaments of glass. The "cross-sectional aspect ratio" is measured by cutting the fibrous glass filler perpendicularly to its longitudinal axis and measuring the ratio between the major axis of the cross section (i.e. its longest linear dimension and the minor axis of the cross section (i.e. its shortest linear dimension perpendicular to the major axis). For comparison, circular cross-section fibers that are typically employed have a cross-sectional aspect ratio of about 1. Glass flakes fillers are differentiated from non-circular cross-sectional glass filler by their non-fibrous nature.

While not wishing to be bound by theory, it is believed that the use of fibrous non-circular cross-sectional glass filler enables an increase in bond strength between the filler and the polymer material. Due to their specific surface areas which is greater than those of conventional fibrous circular cross-sectional glass fillers, such fibrous non-circular cross-sectional glass fillers produce under standard conditions an improved reinforcing effect with significant improvement in a) impact resistance, b) warpage stability and c) fluidity during injection molding compared to conventional fibrous glass fillers having a circular cross-sectional shape. The use of fibrous glass filler having a non-circular cross-sectional shape is described in EP 400935 EP 0246620, JP 03263457 or JP 03220260 for poly(butylene) terephthalate compositions. Examples of fibrous glass fillers having a cross-sectional aspect ratio of 4 or greater than 4 are rectangular or flat-shaped ones. Preferred reinforcing agents used in the polyester composition of the present invention are fibrous glass fibers having a non-circular cross-sectional aspect ratio of 4 or greater than 4. Particularly preferred are fibrous glass fillers having a non-circular cross-sectional aspect ratio of 4. More particularly preferably, the geometry of fibrous non-circular cross-sectional glass filler corresponds to a macroscopic rectangular box with dimensions of a) a width range of at or about 2 to 3 mm, b) a length range of at or about 3 to 4 mm and c) a thickness range of at or about 0.5 to 1 mm, wherein dimension measurements are made by inspecting the filler visually and measuring the dimensions with a micrometer.

The polyester composition according to the present further comprises a fibrous reinforcing agent designated (c) elsewhere herein and having a circular cross section, glass flakes or mixtures thereof. Preferably, these conventional glass fillers are present in an amount from 1 to 35 wt-% and more preferably in an amount from 5 to 30 wt-%, the weight percentages being based on the total weight of the polyester composition.

The average fibrous reinforcing agent having a circular cross section size which is useful in the present invention can have any standard size as commonly understood and used by those having skill in the field. Preferably the average diameter of such fillers for use in the present invention is in the range from 5 to 15 microns and more preferably from 7 to 12 microns. Preferably the average length of such fillers for use in the present invention is in the range from 1 to 10 mm and more preferably from 2 to 5 mm, wherein dimension measurements are made by inspecting the filler visually and measuring the dimensions with a micrometer.

The glass flakes particle size can have any standard size again as commonly understood and used by those having skill in the field, but preferably, they have a particle size (D90 value) of less than or equal to 300 microns. The D90 value corresponds to a particle size below which 90 wt-% of the particles lie, wherein the test method of the particle size distribution using mesh screens meets the standards set forth in ISO 3310-1.

The average thickness of the glass flakes can be any standard thickness as used by those of skill in the field but preferably, it is in the range from 1 to 10 microns and more preferably from 3 to at or about 7 microns.

The polyester composition according to the present invention comprises mica. Preferably, mica is present in an amount from 1 to 5 wt-% and preferably in an amount from 2 to 10 wt-%, the weight percentages being based on the total weight of the polyester composition. The type of mica used in the present invention is not limited to any particular types. Muscovite, phlogopite, biolite, paragonite or synthesized mica may be used. Micas are further described in Kirk-Othmer, Encyclopedia of Chemical Technology, Second Edition, Vol. 13, pp. 398-424. Preferably, mica used in the polyester composition according to the present invention is a phlogopite mica. The particle size of mica which is useful in the present invention can vary, but preferably, the mica may have a particle size (D90 value) of less than or equal to 300 microns, or more preferably of less than or equal to 150 microns. The D90 value corresponds to an equivalent spherical diameter below which 90 wt-% of the particles lie wherein the test method of the particle size distribution using mesh screens meets the standards set forth in ASTM-C-136-84a,

Optionally, the polyester compositions of the invention may further include conventional amounts of additives which are generally comprised in thermoplastic resin compositions.

The polyester composition according to the present invention may optionally contain one or more polymeric tougheners. The toughener will typically be an elastomer having a relatively low melting point, generally lower than 200°C, preferably lower than 150°C and that has attached to it functional groups that can react with the polyester (and optionally other polymers present). Since polyester resins usually have carboxyl and hydroxyl groups present, these functional groups usually can react with carboxyl and/or hydroxyl groups. Examples of such functional groups include epoxy, carboxylic anhydride, hydroxyl (alcohol), carboxyl, and isocyanate. Preferred functional groups are epoxy, and carboxylic anhydride, and epoxy is especially preferred. Such functional groups are usually "attached" to the polymeric tougheners by grafting small molecules onto an already existing polymer or by copolymerizing a monomer containing the desired functional group when the polymeric tougheners molecules are made by copolymerization. As an example of grafting, maleic anhydride may be grafted onto a hydrocarbon rubber using free radical grafting techniques. The resulting grafted polymer has carboxylic anhydride and/or carboxyl groups attached to it. An example of a polymeric toughener wherein the functional groups are copolymerized into the polymer is a copolymer of ethylene and a (meth)acrylate monomer containing the appropriate functional group. By (meth)acrylate herein is meant the compound may be either an acrylate, a methacrylate, or a mixture of the two. Useful (meth)acrylate functional compounds include (meth)acrylic acid, 2-hydroxyethyl (meth)acrylate, glycidyl (meth)acrylate, and 2-isocyanatoethyl (meth)acrylate. In addition to ethylene and a functional (meth)acrylate monomer, other monomers may be copolymerized into such a polymer, such as vinyl acetate, unfunctionatized (meth)acrylate esters such as ethyl (meth)acrylate, n-butyl (meth)acrylate, and cyclohexyl (methacrylate. Preferred toughening agents include those listed in US 4,753,980. Especially preferred tougheners are copolymers of ethylene, ethyl acrylate or n-butyl acrylate, and glycidyl methacrylate, such as EBAGMA and ethylene/methyl acrylate copolymers.

It is preferred that the polymeric toughener, if used, contain 0.5 to 20 wt-% of repeat units derived from monomers containing functional groups, preferably 1.0 to 10 wt-%, more preferably 7 to 13 wt-% of repeat units derived from monomers containing functional groups. There may be more than one type of repeat unit derived from functionalized monomer present in the polymeric toughener. It has been found that toughness of the composition is increased by increasing the amount of polymeric toughener and/or the amount of functional groups. However, these amounts should preferably not be increased to the point that the composition may crosslink, especially before the final part shape is attained.

The polymeric toughener may also be thermoplastic acrylic polymers that are not copolymer of ethylene. The thermoplastic acrylic polymers are made by polymerizing acrylic acid, acrylate esters (such as methyl acrylate, n-propyl acrylate, isopropyl acrylate, n-butyl acrylate, n-hexyl acrylate, and n-octyl acrylate), methacrylic acid, and methacrylate esters (such as methyl methacrylate, n-propyl methacrylate, isopropyl methacrylate, n-butyl methacrylate (BA), isobutyl methacrylate, n-amyl methacrylate, n-octyl methacrylate, glycidyl methacrylate (GMA) and the like). Copolymers derived from two or more of the forgoing types of monomers may also be used, as well as copolymer made by polymerizing one or more of the forgoing types of monomers with styrene, acryonitrile, butadiene, isoprene, and the like. Part or all of the components in these copolymers should preferably have a glass transition temperature of not higher than 0°C. Preferred monomers for the preparation of a thermoplastic acrylic polymer toughening agent are methyl acrylate, n-propyl acrylate, isopropyl acrylate, n-butyl acrylate, n-hexyl acrylate, and n-octyl acrylate.

It is preferred that a thermoplastic acrylic polymer toughening agent have a core-shell structure. The core-shell structure is one in which the core portion preferably has a glass transition temperature of 0°C or less, while the shell portion is preferably has a glass transition temperature higher than that of the core portion. The core portion may be grafted with silicone. The shell section may be grafted with a low surface energy substrate such as silicone, fluorine, and the like. An acrylic polymer with a core-shell structure that has low surface energy substrates grafted to the surface will aggregate with itself during or after mixing with the thermoplastic polyester and other components of the composition of the invention and can be easily uniformly dispersed in the composition.

When present, the tougheners preferably comprise from 0.5 to 15 wt-%, or more preferably from 1 to 10 wt-%, the weight percentages being based on the total weight of the polyester composition.

The polyester compositions according to the present invention may optionally contain one or more oxidative stabilizers. Examples of suitable oxidative stabilizers include phosphite and hypophosphite stabilizers, hindered phenol stabilizers, hindered amine stabilizers, thioesters, and phenolic based anti-oxidants that hinder thermally induced oxidation of polymers where high temperature applications are used. When present, the oxidative stabilizers comprise from 0.1 to 3 wt-%, or preferably from 0.1 to 1 wt-%, the weight percentages being based on the total weight of the polyester composition.

The polyester composition used in the present invention may further include modifiers and other ingredients, including, without limitation, lubricants, UV light stabilizers, antistatic agents, coloring agents, flame retardants, nucleating agents, crystallization promoting agents and other processing aids known in the polymer compounding art.

The polyester compositions are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

In another aspect, the present invention relates to an insulating unit made from the polyester composition of the invention. Preferably, the insulating unit according to the present invention is used for high dielectric performance demanding applications. The insulating unit according to the present invention may be produced by extrusion, shaping or by any molding process know to one of ordinary skill in the art, comprising for example injection molding, compression molding or blow molding. Preferably, the article is molded by injection molding processes.

The polyester compositions according to the present invention are particularly useful in electrical and electronic applications. Such uses include lamp sockets, lamp holders, terminal blocks, end connectors, ignition coil components, relay sockets, high-voltage connectors, spark plug components, emergency switches, controller and switches for domestic appliances including ovens cookers and washing machines, electric motor brush holders, coil formers, circuit breakers, circuit breaker housings, contactor housings and print connectors, as well as electrical and electronic connectors, distributors, switches and microswitches.

In a preferred embodiment, the insulating unit according to the present invention is an ignition coil component, such as for example a housing, a spool or other plastic parts used in such systems. Preferably, the ignition coil component is a spool. Ignition coil assemblies include a central core, a primary winding, a secondary winding, and a case. The central core is generally cylindrical and is formed along a main axis. The primary winding is disposed about the central core and is connected to a power source. The secondary winding is wound on a spool that is configured to be connected to a spark plug. Ignition coils are filled up around a coil portion, as fitted in a housing so at to prevent the high voltage, as generated by the coil portion, from leaking out and a dielectric breakdown from being caused in the coil. Various configurations of such ignition coils for internal combustion engines have been proposed to achieve high energy delivery, compactness and reduced weight. Preferably, the ignition coil component made of the polyester composition according to the present invention is an ignition pencil coil component, such as for example an ignition pencil coil housing, a spool or any plastic part used in such systems, and more preferably, it is an ignition pencil coil spool. Such ignition pencil coil designs allow a direct connection between the coil and the spark plug terminal resulting in less electrical interference, less electrical loss, better ignition and improved engine performance due to the avoidance of high voltage cables. This design greatly simplifies the assembly of the ignition system. The ignition pencil coils also bring environmental benefits to the production process as well as substantial improvements in efficiency, size and weight savings to the automotive manufacturers.

In another aspect, the present invention relates to an electronic or electrical device comprising the insulating unit described above in conjunction with conducting elements. Preferably, the electric device is an ignition coil assembly.

The invention will be further described in the Examples below.

### EXAMPLES

The following materials were used for preparing the polyester composition according to the examples of the present invention and the comparative examples:
Poly(cyclohexylene-dimethylene) terephthalate (PCT): commercially available from Eastman Chemical Co., Kingsport, Tennessee, USA. (product number: PCT 13787).
N.c. cross-sectional glass filler: non-circular cross-sectional glass fillers characterized by having the geometry of a rectangular box with dimensions of 3-4 x 2-3 x 0.5-1 mm (length x width x thickness), having a fibrous nature and a cross-sectional aspect ratio of about 4. These fibrous non-circular cross-sectional glass fillers are commercially available from Nitto Boseki Co., Ltd, Tokyo, Japan (product number: CSG3PA830).
Glass flakes filler: characterized by having a D90 value of 250 microns and a thickness of approximately 5 microns and having a non-fibrous nature. These non-fibrous glass flakes fillers are commercially available from NGF, St Helenes, England, under the trademarks Microglas^{®} REF-160.
Mica: delaminated pure phlogopite mica having an equivalent spherical diameter (D90 value) of 110 microns and a median size of 45 microns supplied by Zemex, Atlanta, Georgia, USA under the trademark Suzorite 200-HK.
Glass fibers filler: characterized by having an average fiber diameter of 10 microns and a standard cut length of 3.2 mm and having a fibrous nature and a cross-sectional aspect ratio of 1. These fibrous circular cross-sectional glass fillers are commercially available from PPG Industries Inc., Pittsburgh, Pennsylvania, USA under the trademarks Chop Vantage^{®} 3540.
Crastin^{®} 6136NC010 is a poly(butylene)terephatalate (PBT) supplied by E. 1. du Pont de Nemours and Company, Wilmington, Delaware, USA.
Epon^{®} 1009 is an epoxy resin supplied by Resolution Performance Products, Houston, Texas 77210, USA.
Steamic OOS^{™} is a nucleant supplied by Talc de Luzenac, Toulouse, France.
Araldite^{®} ECN1299 is an epoxy cresol novolac resin supplied by Ciba Specialty Chemicals, Tarrytown, New York, USA.
Irganox^{®} 1010 is a phenolic based antioxidant supplied by Ciba Specialty Chemicals, Tarrytown, New York, USA.
Ultranox^{®} 626A is a diphosphite based antioxidant supplied by G. E. Specialty Chemicals, Parkersburg, West Virginia, USA.
EMAC^{®} SP2260 is an ethylene methyl-acrylate copolymer, toughener supplied by Eastman Chemical Co., Kingsport, Tennessee, USA.
Vestowax^{®} A01 535 is an oxidized polyethylene wax, lubricant supplied by Degussa GmbH, Düsseldorf, Germany.

The formulation of the polyester composition according to the present invention and comparative ones are given in Table 1, with examples designated by "E" and comparative examples by "C".

**Table 1:**

| Polyester compositions | | | | |
|---|---|---|---|---|
| | **C1** | **C2** | **C3** | **E1** |
| PCT | 54 | 54 | 54 | 54 |
| n.c. cross sectional glass fillers | - | - | 23 | 23 |
| glass fibers fillers | 23 | 23 | - | - |
| glass flakes fillers | 10 | 5 | 10 | 5 |
| mica | - | 5 | - | 5 |
| Crastin^{®}6136NC010 | 3 | 3 | 3 | 3 |
| Epon^{®} 1009 | 1.4 | 1.4 | 1.4 | 1.4 |
| Steamic^{®} OOS | 0.9 | 0.9 | 0.9 | 0.9 |
| Araidite^{®} ECN1299 | 0.6 | 0.6 | 0.6 | 0.6 |
| Irganox^{®} 1010 | 0.25 | 0.25 | 0.25 | 0.25 |
| Ultranox^{®} 626A | 0.25 | 0.25 | 0.25 | 0.25 |
| EMAC^{®} SP2260 | 6 | 6 | 6 | 6 |
| Vestowax^{®} AO1535 | 0.6 | 0.6 | 0.6 | 0.6 |

| | | | | |
|---|---|---|---|---|
| Ingredient quantities are given in wt-% on the basis of the total weight of the polyester composition. | | | | |

The compositions of the Example and the Comparative Examples were prepared by melt blending the ingredients shown in Table 1 in a 40 mm twin screw kneader operating at about 300°C using a screw speed of about 300 rpm, a melt temperature displayed of about 305°C and a melt temperature measured by hand of about 320°C. Upon exiting the extruder, the compositions were cooled and pelletized.

### Dielectric strength

Dielectric strength was measured according to CEI/IEC 60243-1:1998. Measurements were done on injection molded samples (melt temperature = 315°C; mold temperature = 130°C and a hold pressure of 80 MPa) with a thickness of 1 mm (geometry ISO plaques 80 x 80 mm). The test specimens were conditioned at room temperature and relative humidity for 24 hours before measurements.

Samples were placed between two electrodes and the voltage was increased at a uniform rate (0,5KVolts/second) until dielectric breakdown of the material was achieved, wherein dielectric breakdown corresponds to electrical burn-through (puncture) of the test specimen.

Dielectric strength was measured for five test specimens made of the polyester composition according to the invention and comparative polyester compositions and the results is the average of them. Dielectric strength results are given in Table 2.

### Mechanical properties

Mechanical tensile properties, i.e. E-modulus, strain at break and stress at break, were measured according to ISO 527. Measurements were done on injection molded ISO tensile bar R60 samples (melt temperature = 315°C; mold temperature = 130°C and a hold pressure of 80 MPa) with a thickness of the test specimen of 4 mm and a width of 10 mm according to ISO 527. The test specimens were measured dried as moulded.

Mechanical properties were measured for eight test specimens made of the polyester composition according to the invention and comparative polyester compositions and the results is the average of them. Mechanical properties results are given in Table 3.

**Table 2.**

| | **C1** | **C2** | **C3** | **E1** |
|---|---|---|---|---|
| **Dielectric strength / kV mm⁻¹** | **38.8** | **40.6** | **43.9** | **47.7** |
| Std.dev [-] | 0.7 | 1.4 | 1.0 | 1.3 |

**Table 3.**

| | **C1** | **C2** | **C3** | **E1** |
|---|---|---|---|---|
| **E-Modulus [MPa]** | **8850** | **8994** | **8917** | **8837** |
| Std.dev. [-] | 60 | 180 | 252 | 110 |
| **Stress at Break [MPa]** | **113** | **102** | **100** | **105** |
| Std.dev. [-] | 4 | 1 | 2 | 3 |
| **Strain at Break [%]** | **2** | **1.7** | **1.6** | **1.8** |
| Std.dev. [-] | 0.2 | 0 | 0.1 | 0.1 |

The dielectrical performance of material based molded samples was quantified with the dielectric strength which corresponds to voltage per unit thickness at which a material will conduct electricity. The higher the value of dielectric strength, the higher the material resists the passage of electrical current and the more electrically insulating a material is.

As shown in Table 2, the composition according to the present invention (**E1**) which comprised a combination of non-circular cross-sectional glass filler having a cross-sectional aspect ratio of about 4, glass flakes and mica showed a significant improvement of the dielectric performance in comparison with the samples that did not comprise the combination of all three fillers (**C1-C3**).

The use of mica in conventional filler reinforced polyester compositions did not lead to a significantly improvement of the dielectric performance of the polyester composition, i.e. an improvement of 4.5% was obtained by adding mica to the comparative sample comprising only glass fibers and glass flakes (from **C1** to **C2**). The use of non-circular cross-sectional glass filler in conventional filler reinforced polyester compositions did not lead to a high improvement of the dielectric performance of the samples, i.e. an improvement of 12.3% was obtained by adding of non-circular cross-sectional glass filler to the comparative sample comprising only glass fibers and glass flakes (from **C1** to **C3**).

Surprisingly, an improvement of the simultaneous use of conventional glass filler (i.e. glass flakes), non-circular cross-sectional glass filler and mica in the polyester composition of the present invention led to an improvement of 20.6% (from **C1** to **E1**). In addition to have significantly improved dielectric performance, the polyester composition of the present invention (**E1**) showed good mechanical properties.

As said before, a balance between high dielectric strength good mechanical properties is desirable for many applications and renders the polyester composition according to the present invention suitable for high performance demanding applications.

## Claims

1. A polyester composition for high performance dielectric applications requiring dielectric strength values that one higher than 30 KV•mm⁻¹, wherein the polyester composition is made by melt blending a mixture comprising:
a) at least one thermoplastic polyester polymer.
b) a fibrous glass filler having a non-circular cross-sectional aspect ratio of 4 or greater than;
c) a fibrous reinforcing agent having a circular cross section, glass flakes or mixtures thereof; and
d) mica.

2. The polyester composition according to claim 1, wherein the at least one thermoplastic polyester polymer is used in an amount from 40 to 70 wt-%, the weight percentages being based on the total weight of the composition.

3. The polyester composition according to either of Claims 1-2, wherein the fibrous glass filler having a non-circular cross-sectional aspect ratio of 4 or greater than 4 is present in an amount from 10 to 35 wt-% of, the weight percentages being based on the total weight of the polyester composition.

4. The polyester composition according to any of Claims 1-3, wherein the fibrous reinforcing agent having a circular cross section, glass flakes or mixtures thereof is present in an amount from 1 to 35 wt-%, the weight percentages being based on the total weight of the polyester composition.

5. The polyester composition according to any of Claims 1-4, wherein the mica is present in an amount from 1 to 15 wt-%, the weight percentages being based on the total weight of the polyester composition.

6. The polyester composition according to any of Claims 1-5, wherein the fibrous glass filler has a cross-sectional aspect ratio of 4, and/or wherein the fibrous glass filler has a geometry of a rectangular box with dimensions of:
a) width range of 2 to 3 mm,
b) length range of 3 to 4 mm, and
c) thickness of 0.5 to 1 mm.

7. The polyester composition according to any of Claims 1-6, wherein the mica has an equivalent spherical diameter (D90 value) of less than or equal to 150 microns.

8. The polyester composition according to any of Claims 1-7, wherein the at least one polyester polymer is chosen among polybutylene terephatalate (PBT), polyethylene terephthalate (PET), Poly(cyclohexylene-dimethylene) terephtalate (PCT) and mixtures thereof.

9. The polyester composition according to any of Claims 1-8, wherein the polyester composition further comprises from 0.5 to 15 wt-% of a toughener, the weight percentage being based on the total weight of the polyester composition, and/or wherein the polyester composition further comprises from 0.1 to 3 wt-% of one or more oxidative stabilizer selected from phosphite stabilizers, hindered phenol stabilizers, thioesters, and phenolic-based antioxidant stabilizers, the weight percentage being based on the total weight of the polyester composition.

10. An insulating unit made from the polyester composition described in any of claims 1 to 9.

11. The insulating unit according to claim 10, which is an ignition system component.

12. The insulating unit according to claim 10 or 11, which is ignition pencil coil component.

13. The insulating unit according to claim 12, wherein the ignition pencil coil component is an ignition pencil coil spool.

14. An electronic or electrical device comprising an insulating unit according to claim 10 in conjuction with conducting elements.

15. The device according to claim 14 which is an ignition coil assembly.

16. A method for the preparation of the polyester composition of any one of claims 1 to 9, comprising the steps of
providing a mixture of:
a) at least one thermoplastic polyester polymer;
b) a fibrous glass filler having a non-circular cross-sectional aspect ratio of 4 or greater than 4;
c) a fibrous reinforcing agent having a circular cross section, glass flakes or mixtures thereof, and
d) mica, and
melt-blending the mixture.

17. Use of a polyester composition as defined in any one of claims 1 to 9 for high performance dielectric applications requiring dielectric strength values that are higher than 30 kV · mm⁻¹.

## Patentansprüche

1. Polyesterzusammensetzung für dielektrische Hochleistungsanwendungen, die Durchschlagsfestigkeitswerte von mehr als 30 kV•mm⁻¹ erfordern, wobei die Polyesterzusammensetzung durch Schmelzmischen einer Mischung hergestellt wird, die Folgendes umfasst:
a) mindestens ein thermoplastisches Polyesterpolymer;
b) einen faserigen Glasfüllstoff, der ein nichtkreisförmiges Querschnittsseitenverhältnis von 4 oder mehr als 4 aufweist;
c) ein faseriges Verstärkungsmittel, das einen kreisförmigen Querschnitt aufweist, Glasflocken oder Mischungen davon und
d) Glimmer.

2. Polyesterzusammensetzung nach Anspruch 1, wobei das mindestens eine thermoplastische Polyesterpolymer in einer Menge von 40 bis 70 Gew.-% verwendet wird, wobei die Gewichtprozentsätze auf dem Gesamtgewicht der Zusammensetzung basieren.

3. Polyesterzusammensetzung nach einem der Ansprüche 1 - 2, wobei der faserige Glasfüllstoff, der ein nichtkreisförmiges Querschnittsseitenverhältnis von 4 oder mehr als 4 aufweist, in einer Menge von 10 bis 35 Gew.-% vorliegt, wobei die Gewichtprozentsätze auf dem Gesamtgewicht der Polyesterzusammensetzung basieren.

4. Polyesterzusammensetzung nach einem der Ansprüche 1 - 3, wobei das faserige Verstärkungsmittel, das einen kreisförmigen Querschnitt aufweist, Glasflocken oder Mischungen davon in einer Menge von 1 bis 35 Gew.-% vorliegt, wobei die Gewichtprozentsätze auf dem Gesamtgewicht der Polyesterzusammensetzung basieren.

5. Polyesterzusammensetzung nach einem der Ansprüche 1 - 4, wobei der Glimmer in einer Menge von 1 bis 15 Gew.-% vorliegt, wobei die Gewichtprozentsätze auf dem Gesamtgewicht der Polyesterzusammensetzung basieren.

6. Polyesterzusammensetzung nach einem der Ansprüche 1 - 5, wobei der faserige Glasfüllstoff ein Querschnittsseitenverhältnis von 4 aufweist und/oder wobei der faserige Glasfüllstoff eine Geometrie eines rechwinkligen Kastens mit den folgenden Dimensionen aufweist:
a) Breitenbereich von 2 bis 3 mm,
b) Längenbereich von 3 bis 4 mm und
c) Dicke von 0,5 bis 1mm.

7. Polyesterzusammensetzung nach einem der Ansprüche 1 - 6, wobei der Glimmer einen äquivalenten kugelförmigen Durchmesser (D90-Wert) von weniger als oder gleich 150 Mikron aufweist.

8. Polyesterzusammensetzung nach einem der Ansprüche 1 - 7, wobei das mindestens eine Polyesterpolymer unter Polybutylenterepththalat (PBT), Polyethylenterephthalat (PET), Polycyclohexylendimethylen)terephthalat (PCT) und Mischungen davon ausgewählt wird.

9. Polyesterzusammensetzung nach einem der Ansprüche 1 - 8, wobei die Polyesterzusammensetzung des Weiteren 0,5 bis 15 Gew.-% eines zähmachenden Mittels umfasst, wobei der Gewichtsprozentsatz auf dem Gesamtgewicht der Polyesterzusamamensetzung basiert und/oder wobei die Polyesterzusammensetzung des Weiteren 0,1 bis 3 Gew.-% eines oder mehrerer oxidativer Stabilisatoren umfasst ausgewählt unter Phosphitstabilisatoren, gehinderten Phenolstabilisatoren, Thioestern und Andioxidationsmittelstabilisatoren auf Phenolbasis, wobei der Gewichtsprozentsatz auf dem Gesamtgewicht der Polyesterzusammensetzung basiert.

10. Isoliereinheit, die aus der Polyesterzusammensetzung, die in einem der Ansprüche 1 bis 9 beschrieben ist, hergestellt ist.

11. Isoliereinheit nach Anspruch 10, die eine Zündungssystemkomponente ist.

12. Isoliereinheit nach Anspruch 10 oder 11, die eine Zündungsstiftwicklungskomponente ist.

13. Isoliereinheit nach Anspruch 12, wobei die Zündungsstiftwicklungskomponente eine Zündungsstiftwicklungsspule ist.

14. Elektronische oder elektrische Vorrichtung umfassend eine Isoliereinheit nach Anspruch 10 in Verbindung mit leitfähigen Elementen.

15. Vorrichtung nach Anspruch 14, die eine Zündungswicklungsanordnung ist.

16. Verfahren für die Herstellung der Polyesterzusammensetzung nach einem der Ansprüche 1-9, umfassend die folgenden Schritte:
das Bereitstellen einer Mischung aus:
a) mindestens einem thermoplastischen Polyesterpolymer;
b) einem faserigen Glasfüllstoff, der ein nichtkreisförmiges Querschnittsverhältnis von 4 oder mehr als 4 aufweist;
c) einem faserigen Verstärkungsmittel, das einen kreisförmigen Querschnitt aufweist, Glasflocken oder Mischungen davon und
d) Glimmer, und
das Schmelzmischen der Mischung.

17. Verwendung einer Polyesterzusammensetzung, wie sie in einem der Ansprüche 1-9 definiert ist, für dielektrische Hochleistungsanwendungen, die Durchschlagsfestigkeitswerte von mehr als 30 kV•mm⁻¹ erfordern.

## Revendications

1. Composition de polyester pour les applications diélectriques de haute performance nécessitant des valeurs de résistance diélectrique qui soient supérieures à 30 kV•mm⁻¹, dans laquelle la composition de polyester est fabriquée par mélange à l'état fondu d'un mélange comprenant:
a) au moins un polymère de polyester thermoplastique;
b) une charge fibreuse de verre ayant un rapport d'aspect transversal non circulaire de 4 à plus de 4;
c) un agent de renfort fibreux ayant une section transversale circulaire, des flocons de verre ou leurs mélanges; et
d) du mica.

2. Composition de polyester selon la revendication 1, dans laquelle le au moins un polymère de polyester thermoplastique est utilisé en une quantité de 40 à 70 % en pds, les pourcentages en poids étant basés sur le poids total de la composition.

3. Composition de polyester selon l'une quelconque des revendications 1 à 2, dans laquelle la charge fibreuse de verre ayant un rapport d'aspect transversal non circulaire de 4 ou plus de 4 est présente en une quantité de 10 à 35 % en pds des pourcentages en poids sur la base du poids total de la composition de polyester.

4. Composition de polyester selon l'une quelconque des revendications 1 à 3, dans laquelle l'agent de renfort fibreux ayant une section transversale circulaire, des flocons de verre ou leurs mélanges est présent en une quantité de 1 à 35 % en pds, les pourcentages en poids étant basés sur le poids total de la composition de polyester.

5. Composition de polyester selon l'une quelconque des revendications 1 à 4, dans laquelle le mica est présent en une quantité de 1 à 15 % en pds, les pourcentages en poids étant basés sur le poids total de la composition de polyester.

6. Composition de polyester selon l'une quelconque des revendications 1 à 5, dans laquelle la charge fibreuse de verre a un rapport d'aspect transversal de 4 et/ou dans laquelle la charge fibreuse de verre a la géométrie d'une boîte rectangulaire avec des dimensions de:
a) plage de largeurs de 2 à 3 mm,
b) plage de longueurs de 3 à 4 mm, et
c) épaisseur de 0,5 à 1 mm.

7. Composition de polyester selon l'une quelconque des revendications 1 à 6, dans laquelle le mica a un diamètre sphérique équivalent (valeur D90) inférieur ou égal à 150 microns.

8. Composition de polyester selon l'une quelconque des revendications 1 à 7, dans laquelle le au moins un polymère de polyester est choisi parmi le poly(téréphtalate de butylène) (PBT), le poly(téréphtalate d'éthylène) (PET), le poly(téréphtalate de cyclohexylène-diméthylène) (PCT) et leurs mélanges.

9. Composition de polyester selon l'une quelconque des revendications 1 à 8, dans laquelle la composition de polyester comprend en outre de 0,5 à 15 % en pds d'un agent de renforcement, le pourcentage en poids étant basé sur le poids total de la composition de polyester, et/ou dans laquelle la composition de polyester comprend en outre de 0,1 à 3 % en pds d'un ou plusieurs agent(s) de stabilisation oxydant(s) sélectionné(s) parmi les stabilisants de type phosphite, les stabilisants de type phénol bloqué, les thioesters et les stabilisants antioxydants à base de phénol, le pourcentage en poids étant basé sur le poids total de la composition de polyester.

10. Unité d'isolation fabriquée à partir de la composition de polyester décrite selon l'une quelconque des revendications 1 à 9.

11. Unité d'isolation selon la revendication 10, qui est un composant de système d'allumage.

12. Unité d'isolation selon la revendication 10 ou 11, qui est un composant de bobine-crayon d'allumage.

13. Unité d'isolation selon la revendication 12, dans laquelle le composant de bobine-crayon d'allumage est un enroulement de bobine-crayon d'allumage.

14. Dispositif électronique ou électrique comprenant une unité d'isolation selon la revendication 10 conjointement à des éléments conducteurs.

15. Dispositif selon la revendication 14, qui est un assemblage d'enroulement d'ignition.

16. Procédé de préparation de la composition de polyester selon l'une quelconque des revendications 1 à 9, comprenant les étapes de
fourniture d'un mélange de:
a) au moins un polymère de polyester thermoplastique;
b) une charge fibreuse de verre ayant un rapport d'aspect transversal non circulaire de 4 ou de plus de 4;
c) un agent de renfort fibreux ayant une section transversale circulaire, des flocons de verre ou leurs mélanges; et
d) du mica, et
le mélange à l'état fondu du mélange.

17. Utilisation d'une composition de polyester telle que définie selon l'une quelconque des revendications 1 à 9, pour les applications diélectriques de haute performance nécessitant des valeurs de résistance diélectrique qui sont supérieures à 30 kV•mm⁻¹.
